# EUROPEAN PATENT APPLICATION

(11) **EP 1 835 368 A2**
(43) Date of publication of application: **19.09.2007**
(21) Application number: 07005312.9
(22) Date of filing: 14.03.2007
(51) Int. Cl.: G05B 19/418

(54) **Programmable controller**

(30) Priority: 15.03.2006 JP 2006070431
(71) Applicant: OMRON CORPORATION, Kyoto-shi, Kyoto 600-8530 (JP)
(72) Inventor: Motosugi, Masafimi, Kyoto-shi, Kyoto 600-8530 (JP)
(74) Representative: Kilian, Helmut

(57) **Abstract**

A programmable controller includes a CPU (central processing unit) unit; and a communication unit coupled to the CPU unit via an internal bus. Each of the CPU unit and the communication unit provides a TCP/IP protocol. The internal bus is coupled to the internet layer of the CPU unit, and is coupled to the Ethernet driver of the communication unit. The internet layer of the CPU unit has a routing function which routes incoming data to at least one of the Ethernet driver of the CPU unit, or the internal bus, and the Ethernet driver of the communication unit has a switching function which routes incoming data to at least one of the internet layer of the communication unit, or the internal bus.

## Description

### TECHNICAL FIELD

The present disclosure relates generally to programmable controllers.

### BACKGROUND

In a network system used for factory automation, a programmable logic controller (PLC) and a computer are often connected through different networks. For example, Japanese Laid-open Patent Application No. 6-231113 describes a system in which a dedicated set of commands compatible for a dedicated protocol is used. However, such a dedicated protocol is designed by a manufacture of a PLC, and is used only with the corresponding PLC. Therefore, when there are PLCs made by different manufactures, a single protocol cannot commonly be used for such PLCs using different protocols.

In view of the above, it would be desirable to provide improved programmable logic controllers (PLCs) which can exchange data with each other through different networks.

### SUMMARY

The invention described herein provides a programmable controller including a CPU (central processing unit) unit; and a communication unit coupled to the CPU unit via an internal bus. The CPU unit provides in a descending order, an application layer, a transport layer, an internet layer, which are compatible with a TCP/IP protocol. The communication unit provides in a descending order, an application layer, a transport layer, an internet layer, an Ethernet driver, and an Ethernet interface, which are compatible with a TCP/IP protocol. The internal bus is coupled to the internet layer of the CPU unit, and is coupled to the Ethernet driver of the communication unit.

These and other features and advantages of the invention will be described in more detail below with reference to associated drawings.

### BRIEF DESCRIPTION OF THE DRAWINGS

The invention may best be understood by reference to the following description taken in conjunction with the accompanying drawings, which illustrate specific embodiments of the present invention. In the drawings, similar reference numerals/symbols correspond to similar elements.
FIG. 1 illustrates a network system including a PLC (programmable logic controller) according to an example embodiment of the invention.
FIG. 2 illustrates an internal configuration of data exchanging functions in the CPU unit and the communication unit constituting the PLC.
FIG. 3 illustrates an example of an IP routing table.
FIG. 4 illustrates a data transmitting operation.
FIG. 5 illustrates an internal process for data received by the Ethernet interface.
FIG. 6 illustrates an internal process for the case where the driver receives data through the internal bus.
FIG. 7 illustrates a switching function in the communication unit.
FIG. 8 illustrates a switching function in the communication unit.
FIG. 9 illustrates a switching function in the communication unit.
FIG. 10 illustrates a switching function in the communication unit.
FIG. 11 illustrates a switching function in the communication unit.
FIG. 12 illustrates a switching function in the communication unit.
FIG. 13 illustrates a switching function in the communication unit.
FIG. 14 illustrates a data transmitting operation of the communication unit.
FIG. 15 illustrates a data receiving operation of the communication unit.
FIG. 16 illustrates a data receiving operation of the communication unit.
FIG. 17 illustrates a protocol for exchanging data between devices connected to different networks.
FIG. 18 illustrates a protocol for exchanging data between devices connected to different networks.
FIG. 19 illustrates a programmable controller according to another example embodiment of the invention.

### DESCRIPTION OF EXAMPLE EMBODIMENTS

### Overview

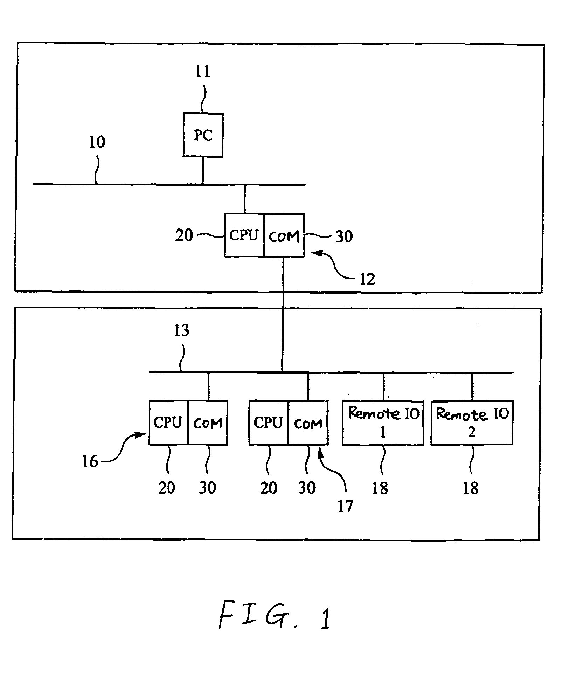

FIG. 1 illustrates a network system including a PLC (programmable logic controller) according to an example embodiment of the invention. This network system includes a PC (personal computer), PLCs, and other devices connected to multiple networks. A PC 10 and a first PLC 12 are connected to a first network 10. The first PLC 12 is also connected to a second network 13. The second network 13 connects a second PLC 16, a third PLC 17, and remote I/Os (input/output devices) 18. The network 10 and 13 may contain any other suitable devices which are not shown in the figure. The system shown in FIG. 1 constitutes a system for manufacturing management/control system. The remote I/O 18 may be an input-type (or data receiving) device to be connected only with an external output device, an output-type (or data transmitting) device to be connected only with an external input device, or an input/output-type device to be connected with both an external input device and an external output device. The remote I/O 18 may be a "field bus-type" device (not shown) which communicates with a master unit of a PLC through a "field bus" which is a dedicated data bus. Alternatively, the remote I/O 18 may be a network-type device (shown in FIG. 1) which communicates with a PLC through a network. Each PLC performs an IN refresh process, a calculation prosecuting process, and an OUT refresh process in a cyclic manner. Specifically, the second PLC 16 and the third PLC 17 control devices for manufacturing equipments (not shown).

The first network 10 is an information network which primarily deals with manufacturing management information such as manufacturing instructions and manufacturing results. The PC 11 connected to the first network 10 is a management computer which performs setups for devices connected to the network system, and retrieves information sent from other devices. The second network 13 is a control network which controls manufacturing equipments. The second PLC 16 and the third PLC 17, and the remote I/Os 18 connected to the second network 13 communicate with each other through the second network 13 in a cyclic manner, and receive/transmit I/O (input/output) data of an input/output device connected to the remote I/Os 18. Each of the networks 10 and 13 may be implemented by the Ethernet (registered trademark). As such, a PC, PLCs, and other devices connected to the network 10 and 13 have communication interfaces which can be connected to the Ethernet.

The first PLC 12 includes a CPU unit 20 and a communication unit 30. The first PLC 12 may include other suitable units which are not shown in FIG. 1. The CPU unit 20 may contain TCP/IP (transmission control protocol/Internet protocol) applications (or application software) such as an email client, an FTP (file transfer protocol) server, and IP routing to exchange message data with the PC 11 by being connected to the first network 10. In other words, the PC 11 may function as an email server, an FTP client, etc. The communication unit 20 has a cyclic communication function to exchange I/O data with the second PLC 16, the third PLC 17, the remote I/Os 18, etc. by being connected to the second network 13.

Each of the second PLC 16 and the third PLC 17 also includes the CPU unit 20 which contains TCP/IP applications, and the communication unit 30 which has a cyclic communication function. These PLCs 16 and 17 may include any suitable units which are not shown in the figure. The communication units 30 of the PLCs 30 and the CPU unit 20 of the first PLC 12 include communication interfaces which can be connected to the Ethernet. The CPU units 20 of the second PLC 16 and the third PLC 17 may include communication interfaces which can be connected to the Ethernet.

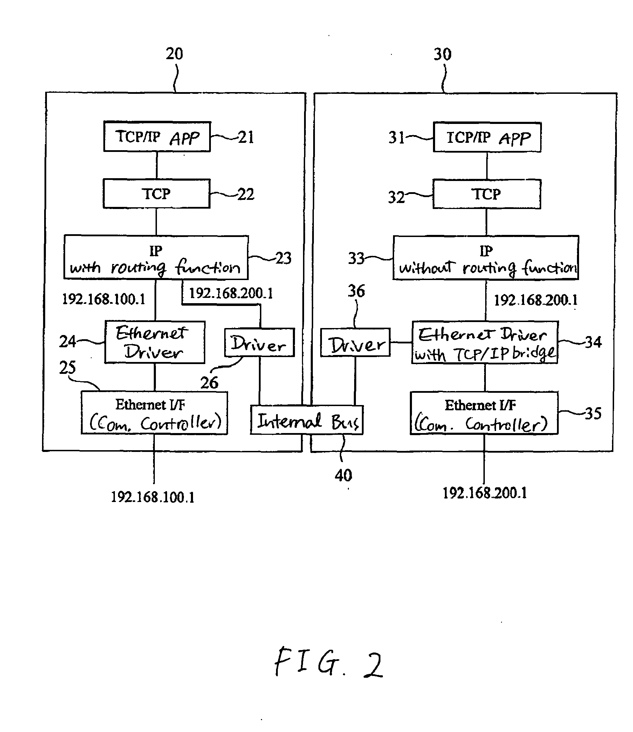

FIG. 2 illustrates an internal configuration of data exchanging functions in the CPU unit 20 and the communication unit 30 constituting the PLC. According to the example embodiment, the units 20 and 30 are compatible with TCP/IP which is a standard network protocol to transmit/receive data.

The CPU unit 20 includes, from the highest layer to the lowest layer, TCP/IP applications 21 for the PLC as the application layer, a transport layer protocol stack 22 for the PLC as the transport layer, an IP protocol stack 23 for the PLC as the Internet layer, and the Ethernet driver 24 and the Ethernet interface 25 as the link layer. The CPU unit 20 is connected to an internal bus 40 of the PLC, and includes driver 26 (or a first driver for the internal bus) which performs data transfer between units in the PLC. The driver 26 is coupled to the IP protocol stack 23 for the PLC, and is positioned lower than the IP protocol 23.

The transport layer protocol stack 22 for the PLC includes a TCP protocol stack and a UDP (user datagram protocol) protocol stack. The IP protocol stack 23 for the PLC is connected to the Ethernet interface 25 through the Ethernet driver 24 as a lower communication interface, and is connected to the Ethernet interface 35 in the communication unit 30 described later through driver 26.

The IP protocol stack 23 for the PLC has a routing function. Therefore, when the IP protocol stack 23 for the PLC receives a packet requiring IP routing, i.e., a packet with a destination of "its own MAC address and different IP address," the stack 23 transfers the packet based on a IP routing table.

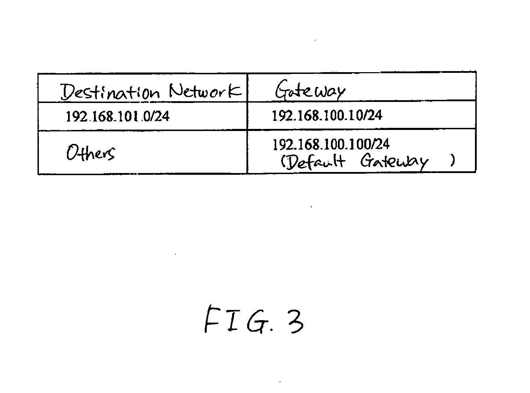

FIG. 3 illustrates an example of an IP routing table. For example, when the IP routing table is defined as shown in FIG. 3, the IP protocol stack 23 for the PLC performs one of the following processes A-C. Process A: When the destination IP address of the received data is its own IP (192.168.100.1, 192.168.200.1), the IP protocol stack 23 for the PLC transfers the data to the transport layer protocol stack 22 for the PLC. Process B: When the destination IP address of the received data is included in 192.168.101.0/24, the IP protocol stack 23 for the PLC transfers the data from the Ethernet driver 24 to the Ethernet interface 25, thereby transmitting it to the node of 192.168.100.10. Process C: When the destination IP address is other than the cases of Processes A and B, the IP protocol stack 23 for the PLC transfers the data from the Ethernet driver 24 to the Ethernet interface 25, thereby transmitting it to the node of 192.168.100.100. In other words, when the destination is unknown, the IP protocol stack 23 for the PLC transmits the data as a default option.

The TCP/IP applications 21 for the PLC, the transport layer protocol stack 22 for the PLC, the IP protocol stack 23 for the PLC, the Ethernet driver 24, and the Ethernet interface 25 are the same as the four-layer protocols constituting the standard TCP/IP. As such, the PC 11 having a communication interface which can be connected to the Ethernet is capable of exchanging data with the CPU unit 20 of the first PLC 12 using the TCP/IP protocol. In other words, when exchanging data between the PC 11 and the first PLC 12, a dedicated (or customized) protocol is not necessary, and thus, the standard TCP/IP protocol can be utilized.

### CPU Unit

Functions of each processing unit will be described below while describing the operation of the CPU unit 20.

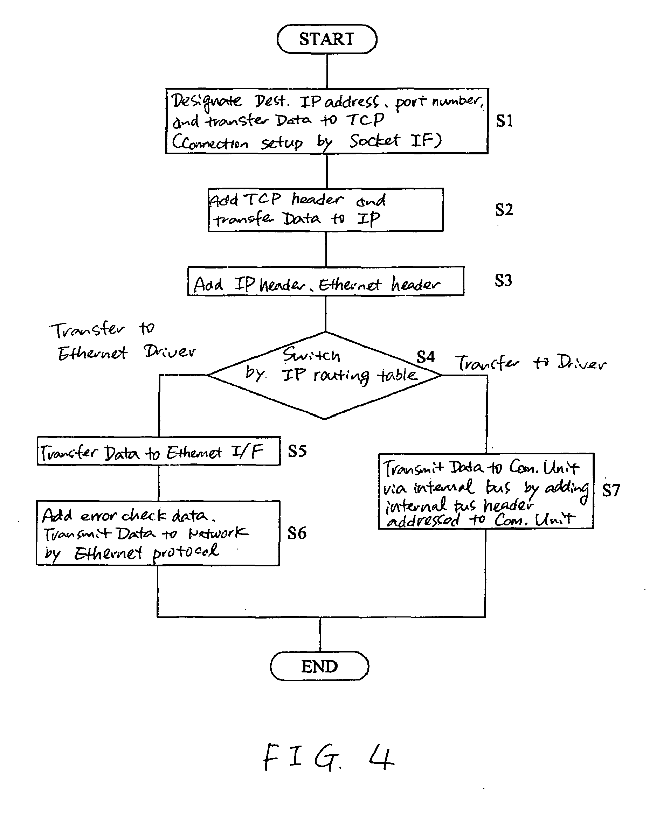

FIG. 4 illustrates a data transmitting operation. An application in the TCP/IP applications 21 designates a destination IP address and a port number, and transfers the data to the transport layer protocol stack 22 for the PLC (S1). The transport layer protocol stack 22 adds a TCP header or an UDP header to the received data, and transfers it to the IP protocol stack 23 (S2). The IP protocol stack 23 adds an IP header and an Ethernet header (S3), and transfers the received data to the Ethernet driver 24 or the driver 26 (S4). The Ethernet driver 24 then transfers the received data to the Ethernet interface 25 as it is (S5). The Ethernet interface 25 adds error check data, and transmits the data to the first network 10 based on the Ethernet protocol (S6). Alternatively, the driver 26 adds an internal bus header for the communication unit to the received data, and transmits the data to the communication unit 30 through the internal bus 40 (S7).

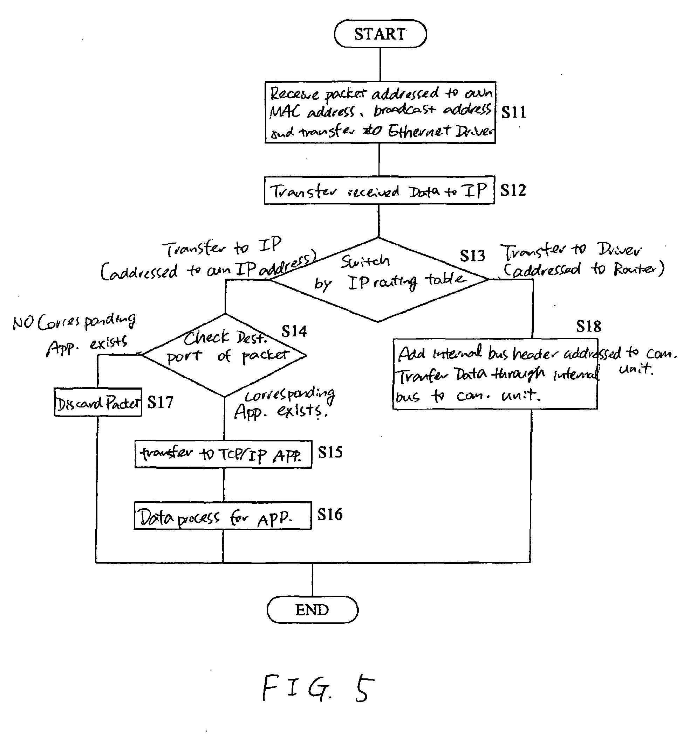

FIG. 5 illustrates an internal process for data received by the Ethernet interface 25. The Ethernet interface 25 parses (or analyzes) the header of the received data. When the destination address is its own MAC (media access control) address or a broadcast address, the interface 25 transfers the received data to the Ethernet driver 24 (S11).

The Ethernet driver 24 transfers all data transferred from the Ethernet interface 25 to the IP protocol stack 23 for the PLC (S12). The IP protocol stack 23 transfers the received data to the transport layer protocol stack 22 or the driver 26 based on the routing rules defined in the IP routing table (S 13). The transport layer protocol stack 22 checks the destination port of the transferred data to see if it is a port number of a corresponding application (S 14). If the destination port is a port of a compatible application, the transport layer protocol stack 22 transfers the data to the TCP/IP applications 21 (S15). The corresponding application in the TCP/IP applications 21 performs data processing based on the received data (S16). If the branch decision of the process step S 14 determines that there is no corresponding application, the received data (or packets) is discarded (S17). Alternatively, the driver 26 adds an internal bus header for the communication unit to the received data, and transmits the data to the communication unit 30 through the internal bus 40 (S18).

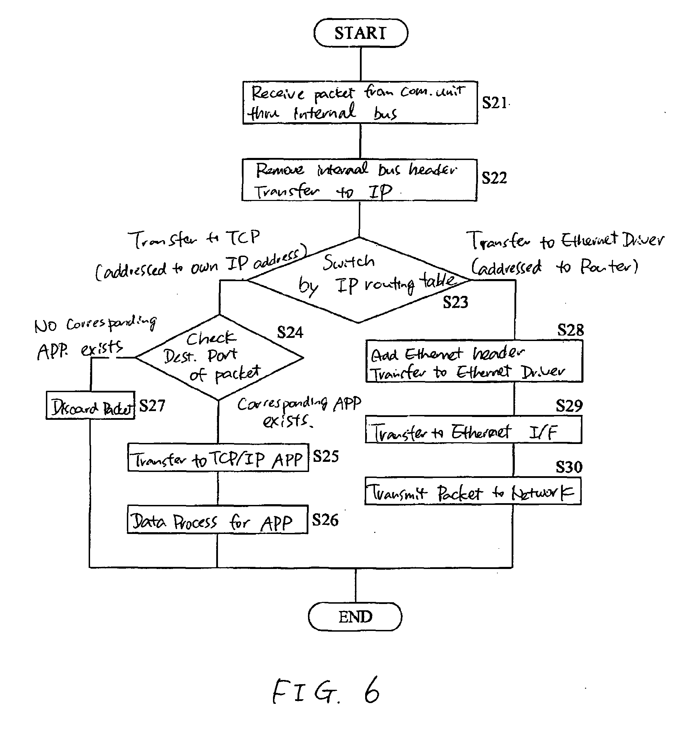

FIG. 6 illustrates an internal process for the case where the driver 26 receives data through the internal bus 40. When the driver 26 receives a packet from the communication unit 30 through the internal bus 40 (S21), the driver removes the internal bus header, and transfers it to the IP protocol stack 23 (S22). The IP protocol stack 23 for the PLC transfers the received data to the transport layer protocol stack 22 or the Ethernet driver 24 based on the routing rules defined in the IP routing table (S23). When transferring to the Ethernet driver 24, the IP protocol stack 23 adds the Ethernet header (S28).

The transport layer protocol stack 22 for the PLC checks the destination port of the transferred data to see if it is a port number of a corresponding application (S24). If the destination port is a port of a compatible application, the transport layer protocol stack 22 transfers the data to the TCP/IP applications 21 (S25). The corresponding application in the TCP/IP applications 21 performs data processing based on the received data (S26). If the branch decision of the process step S24 determines that there is no corresponding application, the received data (or packets) is discarded (S27).

The Ethernet driver 24 which has received the data transferred from the IP protocol stack 23 then transfers the received data to the Ethernet interface 25 as it is (S29). The Ethernet interface 25 adds error check data, and transmits the data to the first network 10 based on the Ethernet protocol (S30).

The above processes enable the CPU unit 20 to send data transferred from the TCP/IP applications 21 to the PC 11, etc. connected to the first network 10 through the Ethernet interface 25. The CPU unit also can send data transferred from the TCP/IP applications 21 to the communication unit 30. In addition, the CPU unit 20 can transfer data transferred from the communication unit 30 to the TCP/IP applications 21, or send the data to the first network 10 from the Ethernet interface 25.

### Communication Unit

The communication unit 30 includes, from the highest layer to the lowest layer, TCP/IP applications 31 as the application layer, a transport layer protocol stack 32 as the transport layer, an IP protocol stack 33 as the Internet layer, and the Ethernet driver 34 and the Ethernet interface 35 as the link layer. The Ethernet driver 34 in the communication unit 30 has a bridge function which is typically performed by a TCP/IP layer, and thus, may be referred to as an "Ethernet driver with a built-in bridge function." The communication unit 30 is connected to an internal bus 40 of the PLC, and includes driver 36 (or a second driver for the internal bus) which performs data transfer between units in the PLC. The driver 36 is connected to the Ethernet driver 34, thereby exchanging data between the drivers 26 and 36 without going through the IP protocol stack 33.

The applications constituting the TCP/IP applications 31 are typically related only to the communication unit, and thus, are not necessarily the same as those of the applications constituting the TCP/IP applications 21 for the PLC. The transport layer protocol stack 32 includes a TCP protocol stack and a UDP protocol stack. The IP protocol stack 33 is connected to the Ethernet interface 35 through the Ethernet driver 34 as a lower communication interface. In this example embodiment, the IP protocol stack 33 of the communication unit 30 does not have a routing function. Thus, the stack 33 is different from the IP protocol stack 23 for the PLC in the CPU unit 20 in that the Internet layer of the communication unit 30 does not have a routing function. As such, when the IP protocol stack 33 receives a packet requiring IP routing, i.e., a packet with a destination of "its own MAC address and different IP address," the stack 33 discards the packet.

According to the example embodiment of the invention, the Ethernet driver 34 is a driver which has functions of a typical Ethernet driver, and a "TCP/IP bridge function." Here, the TCP/IP bridge function refers to functions of parsing (or analyzing) a protocol header of data received by the Ethernet interface 35, determining a destination based on the header, and forwarding the received data to the determined destination. A pattern of such a destination may be one of the followings: (1) both the IP protocol stack 33 and the driver 36, (2) the driver 36 only, and (3) the IP protocol stack 33 only.

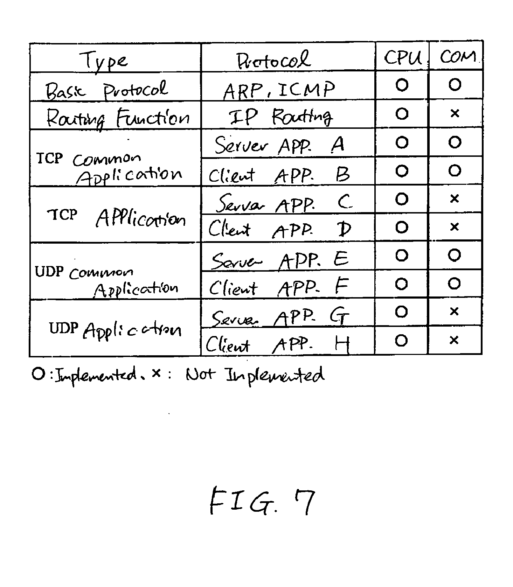

This switching (or forwarding to one of the different destinations) process may depend on the TCP/IP applications 21 for the PLC of the CPU unit 20, the applications implemented by the TCP/IP applications 31 of the communication unit 30, or the functions achieved by the IP protocol stack 23 for the PLC, and by the IP protocol stack 33. Here, it is assume that the CPU unit 20 and the communication unit 30 implement the functions shown in FIG. 7 to describe the switching function.

### Switching Function

### (1) Condition for forwarding to both the IP protocol stack 33 and the driver 36

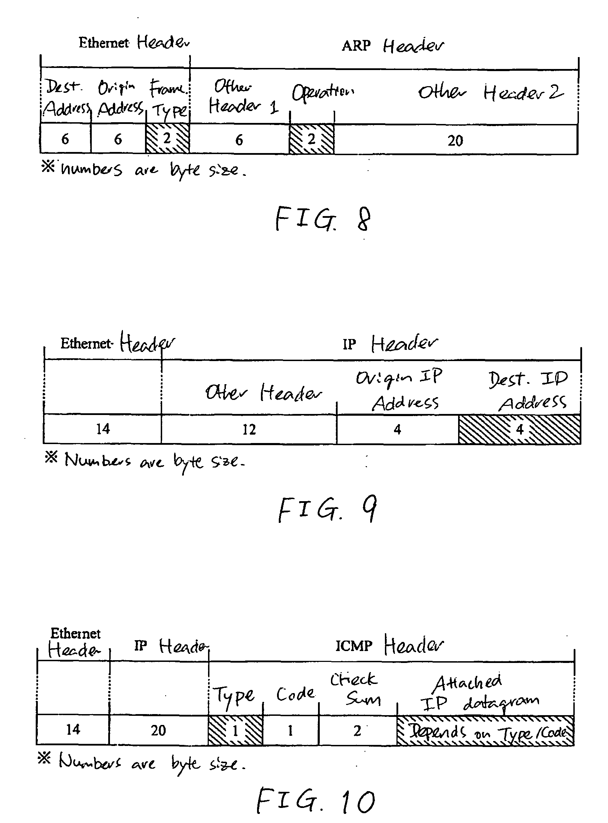

When the data type of the data received by the Ethernet driver 34 is "ARP (address resolution protocol) response data" (condition 1), the data is forwarded to the IP protocol stack 33 and the driver 36. The determination whether the data is ARP response data is made by checking if the frame type of the Ethernet header is "0x806" indicating that it is an ARP, and if the operation value of the ARP header following the Ethernet header is "2" indicating that it is a response (see, FIG. 8).

### (2) Condition for forwarding only to the driver 36

When the data type of the received data is the IP routing data (Condition 2-1), ICMP error data addressed to the PLC (Condition 2-2), a TCP common application (client) (Condition 2-3), a UDP common application (client) (Condition 2-4), a UDP common application (client, fragment data) (Condition 2-5), a TCP application (server) (Condition 2-6), a TCP application (client) (Condition 2-7), a UDP application (server) (Condition 2-8), or a UDP application (client) (Condition 2-9), the Ethernet driver 34 transfers the data to the driver 36.

Specific determination for each condition based on protocol identification is performed as follows. First, if the destination IP address of the IP header of the received data is not the IP address of the communication unit 30, then the data satisfies Condition 2-1 (see, FIG. 9).

If the type of the ICMP header of the received data is one of 3, 4, 5, 11, or 12, and if the attached IP datagram meets one of Conditions 2-3 to 2-9, then the data satisfies Condition 2-2 (see, FIG. 10).

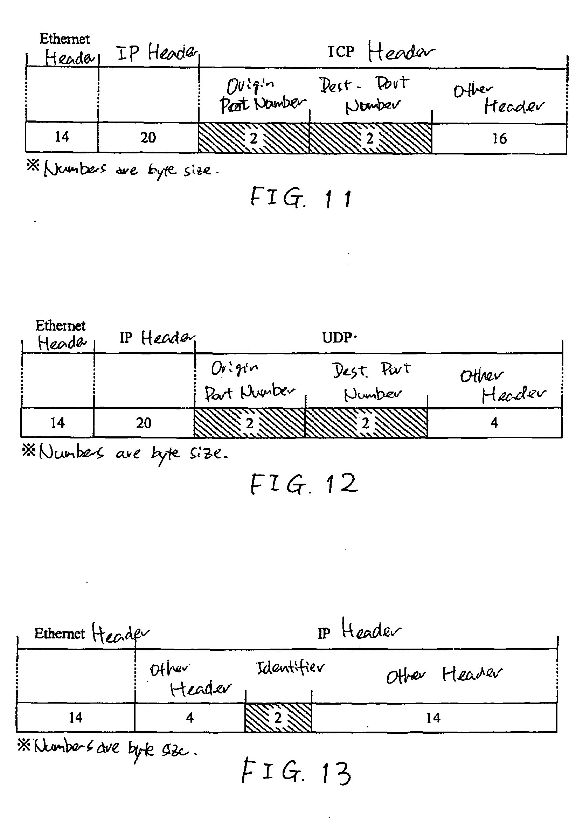

If the destination port number of the TCP header of the received data is within a range of ports assigned to the CPU unit, then the data satisfies Condition 2-3 (see, FIG. 11). As such, the range of the port numbers used by each application constituting the TCP/IP applications 21 for the PLC and the TCP/IP applications 31 is assigned to each unit. For example, applications implemented by the CPU unit 20 use port numbers ranging from 10001-20000, while applications implemented by the communication unit 30 use port numbers ranging from 20001-30000. In such a case, if the destination port number of the TCP header of the received data is within a range of 10001-20000, then the data may be data used by the application implemented by the CPU unit 20, and cannot be data used by the application implemented by the communication unit 30. Therefore, in this case, the received data is transferred to the driver 36, thereby forwarding to the CPU unit 20.

Similarly, if the destination port number of the UDP header of the received data is within a range of ports assigned to the CPU unit, then the data satisfies Condition 2-4 (see, FIG. 12). In the case of the packets follows the UDP protocol, when a fragment (or data segmentation) by IP occurs, a UDP header is not added to packets (or data) which are the second or later packets. At the same time, an identifier field of the IP header stores information regarding the fragment, and a serial number (see, FIG. 13). As such, based on such an identifier, data corresponding to the data satisfying Condition 2-4 also satisfies Condition 2-5.

If the destination port number of the TCP header of the received data is not a support server port (server application A) of the TCP/IP applications 31 of the communication unit 30, then the data satisfies Condition 2-6 (see, FIG. 11). In other words, if the data is not supported by the communication unit 30, then such data is not necessary to the TCP/IP applications 31, and thus, forwarded to the CPU unit 20.

If the origin port number of the TCP header of the received data is not a support client port (client application B) of the TCP/IP applications 31 of the communication unit 30, then the data satisfies Condition 2-7 (see, FIG. 11).

If the destination port number of the UDP header of the received data is not a support server port (server application E) of the TCP/IP applications 31 of the communication unit 30, then the data satisfies Condition 2-8 (see, FIG. 12).

If the origin port number of the UDP header of the received data is not a support client port (client application F) of the TCP/IP applications 31 of the communication unit 30, then the data satisfies Condition 2-9 (see, FIG. 12).

### (3) Condition for forwarding only to the IP protocol stack 33

If the received data satisfies none of Conditions 2-1 to 2-9, the data is forwarded to the IP protocol stack 33.

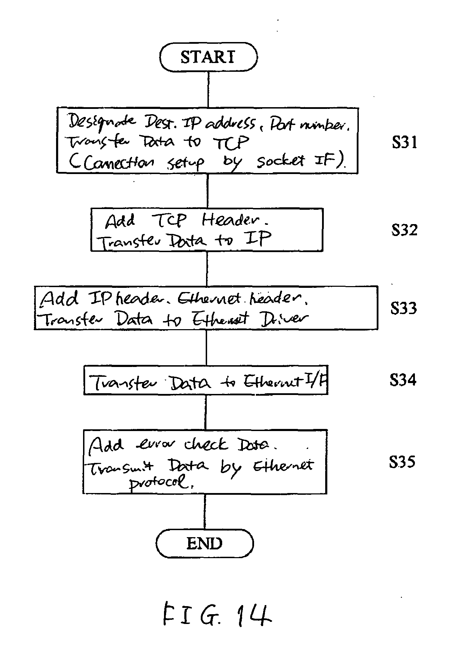

Functions of each processing unit will be described below while describing the operation of the communication unit 30. FIG. 14 illustrates a data transmitting operation. An application in the TCP/IP applications 31 designates a destination IP address and a port number, and transfers the data to the transport layer protocol stack 32 (S31). The transport layer protocol stack 32 adds a TCP header or an UDP header to the received data, and transfers it to the IP protocol stack 33 (S32). The IP protocol stack 23 adds an IP header and an Ethernet header, and transfers the received data to the Ethernet driver 34 (S33). The Ethernet driver 34 then transfers the received data to the Ethernet interface 35 as it is (S34). The Ethernet interface 35 adds error check data, and transmits the data to the second network 13 based on the Ethernet protocol (S35).

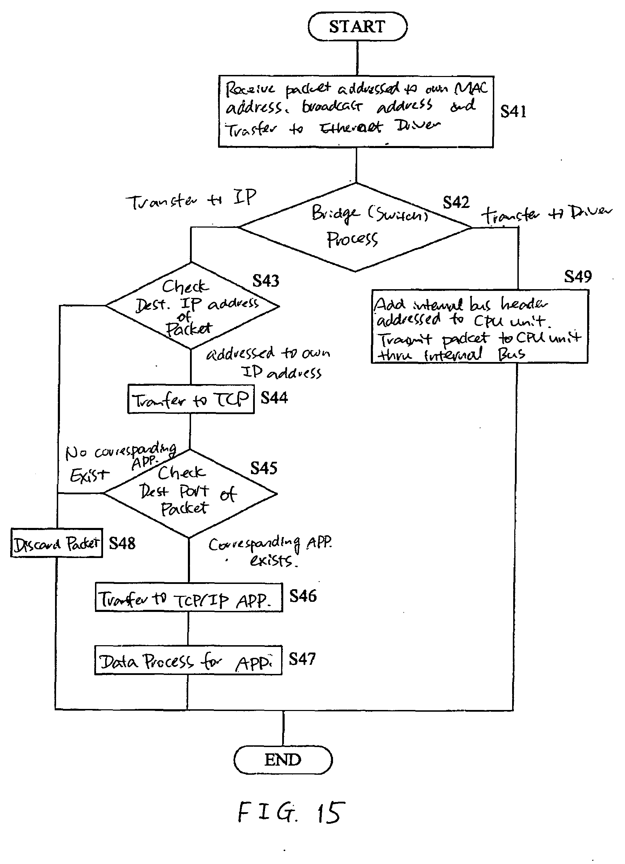

FIG. 15 illustrates an internal process for data received by the Ethernet interface 35. The Ethernet interface 35 parses (or analyzes) the header of the received data. When the destination address is its own MAC (media access control) address or a broadcast address, the interface 35 transfers the received data to the Ethernet driver 34 (S41). The Ethernet driver 34 transfers the received data to the IP protocol stack 33 or the driver 36 based on the bridge (or switching) rules (S42).

The IP protocol stack 33 checks the destination IP address of the packet (S43). If the destination IP address is its own IP address, then the IP protocol stack 33 transfers the received data to the transport layer protocol stack 32 (S44). If the destination IP address is other than its own IP address, then the received data is discarded (S48).

The transport layer protocol stack 32 checks the destination port of the transferred data to see if it is a port number of a corresponding application (S45). If the destination port is a port of a compatible application, the transport layer protocol stack 32 transfers the data to the TCP/IP applications 31 (S46). The corresponding application in the TCP/IP applications 31 performs data processing based on the received data (S47). If the branch decision of the process step S45 determines that there is no corresponding application, the received data (or packets) is discarded (S48). Alternatively, the driver 36 adds an internal bus header for the CPU unit to the received data, and transmits the data to the CPU unit 20 through the internal bus 40 (S49).

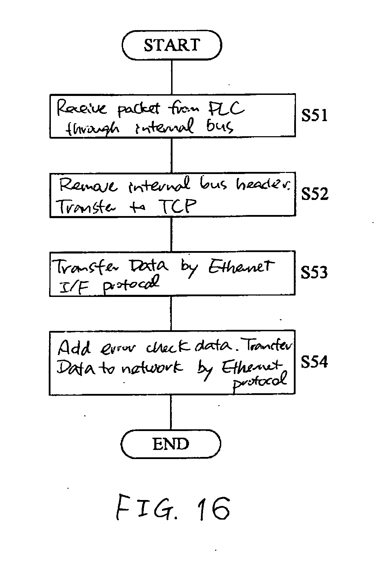

FIG. 16 illustrates an internal process for a case where the driver 36 receives data through the internal bus 40. When the driver 36 receives a packet from the CPU unit 20 through the internal bus 40 (S51), the driver removes the internal bus header, and transfers it to the Ethernet driver 34 (S52). The Ethernet driver 34 then transfers the received data to the Ethernet interface 35 as it is (S53). The Ethernet interface 35 adds error check data, and transmits the data to the second network 13 based on the Ethernet protocol (S54).

The above processes enable the communication unit 30 to send data transferred from the TCP/IP applications 31 to the PLCs, etc. connected to the second network 13 through the Ethernet interface 35. The communication unit 30 also can send data transferred from the CPU unit 20 to the second network 13. In other words, the communication unit 30 can transfer data transferred from an application of the TCP/IP applications 21 for the PLC, or data received from the PC 11 through the CPU unit 20 to the PLCs, etc. connected to the second network 13. Conversely, the PLCs or other devices connected to the second network 13 can exchange data through the communication unit 30 with an application of the TCP/IP applications 21 for the PLC of the CPU unit in the first PLC 12, and further can exchange data with the PC 11, etc. connected to the first network 10.

### Example Implementation

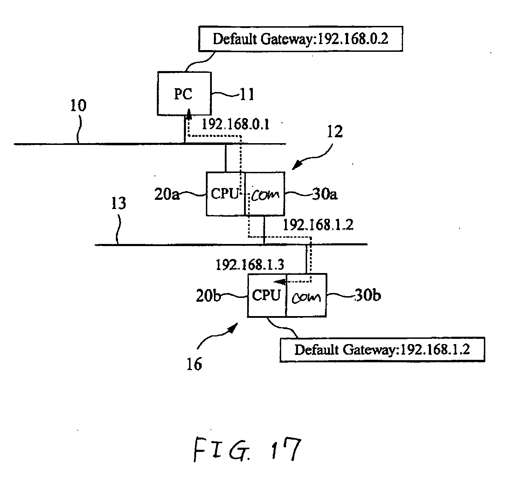

An example of a specific implementation will now be described. In FIG. 17, for the sake of discussion, the CPU unit and the communication unit of the first PLC 12 are labeled as 20a and 30a, respectively. Similarly, the CPU unit and the communication unit of the second PLC 16 are labeled as 20b and 30b, respectively. In the network system shown in FIG. 17, when the PC 11 accesses an FTP server of the CPU unit 20b in the second PLC 16, the following steps are performed to exchange data. In this example embodiment, the CPU unit 20b of the second PLC 16 may include an Ethernet driver or an Ethernet interface. In other words, the CPU unit 20b of the second PLC 16 does not have to include an Ethernet driver or an Ethernet interface. When the CPU unit 20b includes an Ethernet driver or an Ethernet interface, the driver or the interface is not used.

First, the PC 11 performs an FTP access to the CPU unit 20b of the second PLC 16 (IP address = 192.168.1.3). Since the second PLC 16 is connected to a network different from that connected to the PC 11, the PLC 16 transmits packets for FTP access to the CPU unit 20a of the first PLC 12 according to default gateway information of the PC 11.

The CPU unit 20a of the first PLC 12 performs the process described above referring to FIG. 5. Then, the CPU unit 20a recognizes that the received packets for FTP access are addressed to the CPU unit 20b of the second PLC 16. The CPU unit 20a also recognizes that the communication unit 30a and the second PLC 16 are connected to the second network 13. Then, the CPU unit 20a transfers the packets for FTP access to the communication unit 30a using the routing function of the IP protocol stack 23 for the PLC (corresponding to S 18 in FIG. 5). The communication unit 30a performs the process described above referring to FIG. 16, and transmits the packets for FTP access transferred from the CPU unit 20a, to the communication unit 30b of the second PLC 16.

The communication unit 30b performs the process described above referring to FIG. 15. Since the communication unit 30b does not support the FTP server function, the unit 30b transfers the received FTP access packets to the CPU unit 20b based on the TCP/IP bridge Condition 2-6 (corresponding to S49 of FIG. 15). The CPU unit 20b performs a receiving process of the FTP access packets utilizing the process described referring to FIG. 5.

The CPU unit 20b of the second PLC 16 performs the process described referring to FIG. 4, and performs a response to the PC 11 as follows. The CPU unit 20b generates an FTP response addressed to the PC 11 (IP address = 192.168.0.1). Since the PC 11 is connected to a network different from that connected to the CPU unit 20b, the PC 11 transmits the FTP access packets to the communication unit 30b in order to transmit the FTP access packets to the CPU unit 30a of the first PLC 12 according to default gateway information of the CPU unit 20b (corresponding to S7 of FIG. 4). The communication unit 30b performs the process described above referring to FIG. 16, and transmits the packets for the FTP response transferred from the CPU unit 20b to the communication unit 30a.

The communication unit 30a performs the process described above referring to FIG. 15. Since the received FTP response packets are not addressed to its own IP address, the communication unit 30a follows the TCP/IP bridge (or switch) Condition 2-1, and transfers the FTP response packets to the CPU unit 20a (corresponding to S49 of FIG. 15).

The CPU unit 20a of the first PLC 12 recognizes that the transferred FTP response packets from the communication unit 30a are addressed to the PC 11. Since the CPU unit 20a recognizes that the PC 11 and the CPU unit 20a are connected to the same network, the CPU unit 20a transmits the FTP response packets to the PC 11 (corresponding to S 15 of FIG. 5).

The PC 11 performs a receiving process of the FTP response packets sent from the CPU unit 20a. The above process enables data exchange between the PC 11 and the PLC 16 (i.e., the CPU unit 20b) utilizing a general-purpose protocol.

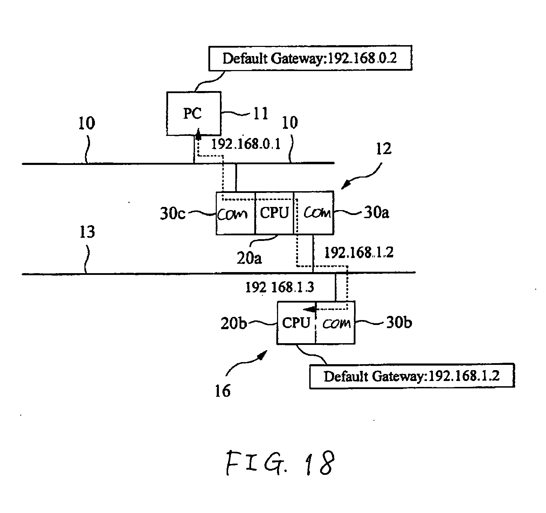

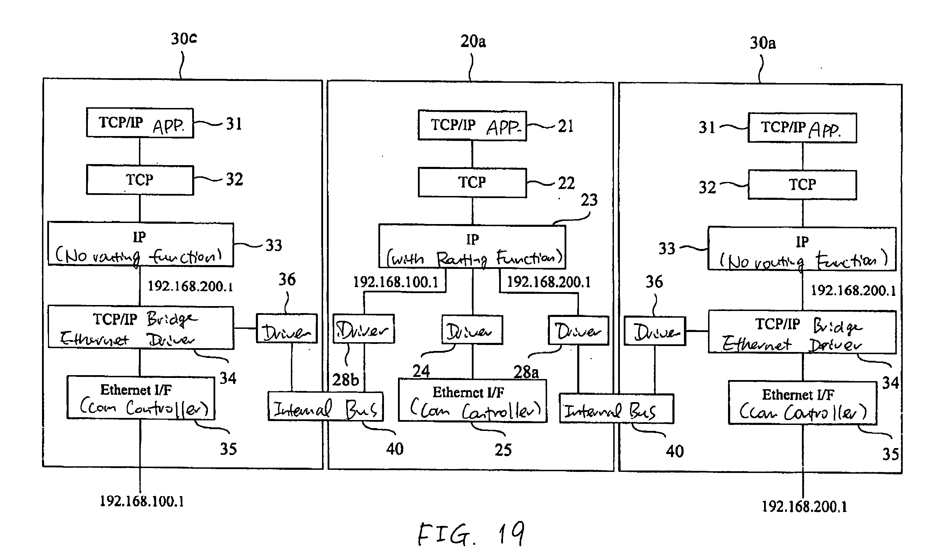

FIG. 18 illustrates another example embodiment of the invention. In this example embodiment, the first PLC 12 connected to the two networks 10 and 13 includes two communication units. Specifically, the first communication unit 30a is connected to the second network 13, and the second communication unit 30c is connected to the first network 10. As shown in FIG. 19, the internal configuration of each of the communication units 30a and 30b is basically similar to that shown in FIG. 2. The CPU unit 20a includes two drivers 28a and 28b connected to the internal bus 40. The drivers 28a and 28b are coupled to their corresponding communication units 30a and 30c, respectively. Once a communication unit to which the data is transferred is determined, the IP protocol stack 23 for the PLC transfers the data to the corresponding driver of the determined communication unit. Although there are two drivers for the internal bus in FIG. 19, the system may include three or more drivers for the internal bus in order to utilize three or more communication units. The internal bus 40 is common to the CPU unit 20a, the communication units 30a and 30c, and other units (not shown), and thus, constitutes a single bus. For the sake of simplicity, FIG. 19 shows the internal bus 40 between the CPU unit 20a and the communication unit 30a, and the internal bus 40 between the CPU unit 20a and the communication unit 30c, separately. However, these separate internal buses 40 are implemented by a single bus configuration in an actual system. The CPU unit 20a in this example embodiment does not have to include the Ethernet driver 24 or the Ethernet interface 25 shown in FIG. 19. Although the system may include the driver or the interface, the driver or the interface is not used since the interface 25 is not connected to a network. The CPU unit 20b of the second PLC 16 also may or may not include an Ethernet driver or an Ethernet interface.

Assume that the PC 11 accesses to an FTP server of the CPU unit 20b in the second PLC 16. Specifically, the PC 11 here performs an FTP access to the CPU unit 20b of the second PLC 16 (IP address = 192.168.1.3). Since the second PLC 16 is connected to a network different from that connected to the PC 11, the PLC 16 transmits FTP access packets to the second communication unit 30c of the first PLC 12 according to default gateway information of the PC 11.

The PC 11 transmits the FTP access packets. First, the second communication unit 30c of the first PLC 12 performs a process shown in FIG. 15, and as a process corresponding to the step 42, transfers the FTP access packets from the driver 36 to the CPU unit 20a through the internal bus 40 according to the TCP/IP bridge (switch) Condition 2-1 since the destination IP address is not its own IP address (S49).

The IP protocol stack 23 for the PLC of the CPU unit 20a in the first PLC 12 recognizes that the FTP access packets transferred from the second communication unit 30c are addressed to the CPU unit 20b of the second PLC 16. The CPU unit 20a also recognizes that the first communication unit 30a and the second PLC 16 are connected to the second network 13. Then, the CPU unit 20a transfers the FTP access packets from the driver 28a to the communication unit 30a through the internal bus 40 (corresponding to S 18). The communication unit 30a performs the process described above referring to FIG. 16, and transmits the FTP access packets transferred from the CPU unit 20a through the internal bus 40, to the communication unit 30b of the second PLC 16 through the Ethernet driver 35 and then the second network 13 as it is.

The communication unit 30b of the second PLC 16 performs the process described above referring to FIG. 15. Since the communication unit 30b does not support the FTP server function, the unit 30b transfers the received FTP access packets to the CPU unit 20b through the driver 36 and then the internal bus 40, based on the TCP/IP bridge Condition 2-6 (corresponding to S49). The CPU unit 20b of the second PLC 16 performs a receiving process of the FTP access packets utilizing the process described referring to FIG. 5 (corresponding to S16).

The CPU unit 20b of the second PLC 16 performs a response to the PC 11 as follows. The CPU unit 20b transmits an FTP response addressed to the PC 11 (IP address = 192.168.0.1). Since the PC 11 is connected to a network different from that connected to the CPU unit 20b, the PC 11 transmits the FTP access packets to the communication unit 30b in order to transmit the FTP access packets to the CPU unit 30a of the first PLC 12 according to default gateway information of the CPU unit 20b (corresponding to S7 of FIG. 4). The communication unit 30b transmits the FTP response packets transferred from the CPU unit 20b to the first communication unit 30a through the Ethernet driver and then the Ethernet as it is.

The first communication unit 30a transfers the received FTP response packets to the CPU unit 20a through the internal bus 40 according to the TCP/IP bridge (switch) Condition 2-1 since the received FTP response packets are addressed to its own IP address (S49 of FIG. 15).

The CPU unit 20a receives the FTP response packets at the driver 28a, and performs the receiving process shown in FIG. 5. The CPU unit 20a recognizes that the received packets for FTP response transferred from the first communication unit 30a are addressed to the PC 11. The CPU unit 20a also recognizes that the PC 11 and the second communication unit 30c are connected to the same network. As such, the CPU unit 20a transfers the FTP response packets from the driver 28b to the second communication unit 30c (S 13 and S 18 in FIG. 5). The second communication unit 30c transmits the FTP access packets transferred from the CPU unit 20a through the internal bus 40, to the PC 11 as it is.

The PC 11 performs a receiving process for the FTP response packets sent from the CPU unit 20a. According to the above processes, the PC 11 and the PLC 16 (i.e., the CPU unit 20b) can exchange data by utilizing a general-purpose protocol.

In the above example embodiment, the drivers 28a and 28b for the internal bus in the CPU unit 20a correspond to the communication units 30a and 30c, respectively. In this configuration, the driver 28a for the internal bus performs data bus communication with the communication unit 30a one-by-one, and the driver 28b for the internal bus performs data bus communication with the communication unit 30c. However, the invention is not limited to such a configuration. Specifically, a single driver for the internal bus is commonly used for all communication units. In such a case, since the internal bus 40 is a single common bus, a common driver for the internal bus may have a function of transferring data to a destination communication unit by identifying the destination communication unit.

### Conclusion

According to the example embodiment of the invention, the routing function is provided within the CPU unit. Since such a configuration does not require a communication unit including the routing function, the system does not need a routing table, etc. and enables a simple configuration. Since the Ethernet driver in the communication unit has a switching function, the communication unit can transfer data received from the Ethernet driver of the communication unit to the CPU unit. In addition, the CPU unit can perform a routing process on data transferred through the internal bus, and data received through the Ethernet interface of its own CPU unit. When the data is addressed to the CPU unit, the system can transfer the data to the upper application layer, thereby performing necessary processing on the data.

Further, if the data is addressed to a destination other than the CPU unit, the system can transfer the data through the internal bus to the communication unit. The communication unit can also transfer the data transferred through the internal bus to an external network. As such, the CPU unit can exchange data with the PLCs or other devices connected to the network to which the communication unit is connected. In other words, through the Ethernet, such PLCs and other devices can utilize the applications in the application layer of the CPU unit which are not directly connected to PLCs and other devices. In addition, such data exchange can be performed using a general-purpose TCP/IP protocol.

Data can be transferred between multiple communication units through a CPU unit by utilizing a transferring function of the multiple communication units, and the routing function of the CPU unit. Such system enables data exchange between devices on a network connected to one communication unit, and devices on a network connected to another communication unit by utilizing a general-purpose TCP/IP protocol. The number of the communication units may be three or more.

In addition, the communication unit may assign a range of the port numbers available to the application layer of the unit of interest. The switching function at the communication unit may be implemented based on the destination port number of the received data, and the assigned range of the port numbers. In other words, by comparing the destination port number of the received data to the range, the data can be switched to the application layer of its own unit if the port number is within the range, or to the internal bus driver or the Ethernet driver if it is not, thereby directly transferring the data to the internal bus or the Ethernet.

The example embodiment of the invention utilizes the routing function of the Internet layer implemented in the CPU unit, and the switching function of the Ethernet driver implemented in the communication unit. Such a system enables access from devices connected to the communication unit to the CPU unit using a general-purpose network protocol. When multiple PLCs are connected to multiple networks, devices (computers, PLCs, etc.) connected to such different networks can exchange data through a PLC according to the invention using a general-purpose protocol.

Although the foregoing invention has been described in some detail for purposes of clarity of understanding, it will be apparent that certain changes and modifications may be practiced without departing from the spirit and scope of the invention as defined in the claims. Further, features of the invention described herein may be provided alone or in any combination.

## Claims

1. A programmable controller comprising:
a CPU (central processing unit) unit; and
a communication unit coupled to the CPU unit via an internal bus, wherein
the CPU unit provides in a descending order
an application layer,
a transport layer,
an internet layer, which are compatible with a TCP/IP protocol,
the communication unit provides in a descending order
an application layer,
a transport layer,
an internet layer,
an Ethernet driver, and
an Ethernet interface, which are compatible with a TCP/IP protocol,
the internal bus is coupled to the internet layer of the CPU unit, and is coupled to the Ethernet driver of the communication unit.

2. The programmable controller of claim 1, wherein
the CPU unit and the communication unit further provides
an Ethernet driver, and
an Ethernet interface, which are compatible with a TCP/IP protocol,
the internet layer of the CPU unit has a routing function which routes incoming data to at least one of the Ethernet driver of the CPU unit, or the internal bus, and
the Ethernet driver of the communication unit has a switching function which routes incoming data to at least one of the internet layer of the communication unit, or the internal bus.

3. The programmable controller of claim 2, wherein
a first driver is provided between the internet layer of the CPU unit, and the internal bus, and
a second driver is provided between the Ethernet driver of the communication unit, and the internal bus.

4. The programmable controller of claim 3, wherein
the Ethernet driver of the communication unit performs the switching function based on comparison between a destination port address of the incoming data, and a range of port addresses available to the application layer of the communication unit.

5. The programmable controller of claim 1, wherein
the internet layer of the CPU unit has a routing function which routes incoming data to at least one of the transport layer of the CPU unit, or the internal bus, and
the Ethernet drivers of the communication units have a switching function which routes incoming data to at least one of the internet layers of the communication units, or the internal bus.

6. The programmable controller of claim 5, wherein
a driver is provided between the internet layer of the CPU unit, and the internal bus, and
a plurality of drivers are provided between the Ethernet drivers of the communication units, and the internal bus.

7. The programmable controller of claim 6, wherein
the Ethernet drivers of the communication units perform the switching function based on comparison between a destination port address of the incoming data, and a range of port addresses available to the application layer of the communication unit.
